Europäisches Patentamt

European Patent Office

Office européen des brevets

(19)

(11) Publication number: 0 230 616

A2

## (12) EUROPEAN PATENT APPLICATION

(21) Application number: 86117618.8

(51) Int. Cl.4: G06F 15/40

(22) Date of filing: 18.12.86

(30) Priority: 21.01.86 US 820856

(43) Date of publication of application:
05.08.87 Bulletin 87/32

(84) Designated Contracting States:
DE FR GB IT

(71) Applicant: International Business Machines
Corporation
Old Orchard Road
Armonk, N.Y. 10504(US)

(72) Inventor: Gresham, Joseph Allen, III
5386 Martin's Cove
Stone Mountain Georgia 30088(US)
Inventor: Lenyszyn, Bohdan Myren
111 Roswell Green Lane
Roswell Georgia 30075(US)

(74) Representative: Tubiana, Max
Compagnie IBM France Département de
Propriété Industrielle
F-06610 La Gaude(FR)

(54) Library management system.

(57) A method for improving the performance of library management systems stored in computer storage. Two types of files are created for each document in storage, one of which contains the original document and a set of updated versions to the document. The other file contains control information to map out a specific version of the document.

SDB FILE — 102

| ORIGINAL DOCUMENT | LEVEL 00000 | FIG. 1 |
| DELTA RECORD | LEVEL 00001 | |
| DELTA RECORD | LEVEL 00023 | |
| DELTA RECORD | LEVEL 00042 | |

EP 0 230 616 A2

## LIBRARY MANAGEMENT SYSTEM

Technical Field

This invention generally relates to a library management system in a data processor for documents such as computer programming code, related textual information and/or other data. In particular, this invention relates to a method for storing an indefinite number of versions of documents and related information so that the information may be retrieved quickly and also using a minimum amount of computer storage and processor time.

Prior Art

A library management system or facility, in the context of data processing, is a repository for documents in machine-readable form such as computer programming code, related textual information and/or various types of data. As with other libraries, information can be taken from the library for use. It may also be changed as the result of such use or from additional data becoming available. The information can then be returned to the library, either unchanged or modified. A library must be organized so that information can be readily retrieved and returned to its proper place. It is most desirable that the information in the library be arranged so that it can be retrieved, replaced and modified quickly. Moreover, it is desirable to be able to store each document efficiently, using a minimum amount of computer storage, typically disk storage.

Library management systems for storing computer programs encounter a particular set of problems not generally found in other such systems. Computer programs which are used extensively are often modified to produce new or modified versions. Such versions are introduced generally either to provide new or improved function or to correct errors. Generally speaking, the more successful a computer program is in the marketplace, the more modifications and new versions of that program will be released. This is particularly true for programs which operate on large computer systems such as the IBM 4300 Series or the IBM computers based on 370-type architecture. Moreover, each version of the same program must be stored and accessible for various reasons. For example, a customer may choose to retain a previous version, or in the event of errors in a particular version, their correction often necessitates knowledge of a detailed history of changes in previous versions.

The presently-available systems for library management require either that the entire document for each version of the computer program be stored or that the original program and the difference between the original program and each version be stored separately, a technique which is commonly called the "delta" method.

The former technique entails a considerable cost in the quantity of storage required, although retrieval of the desired version or modification level is quite fast. The present-day delta approach has the advantage of requiring substantially less storage space than the former method; however, the time required to recreate a particular version of the program is considerably slower.

Using the standard delta method, each time a new version or modification level is created, a file is created and stored in association with the original program with an assigned version number. The file of changes in each new version is based on the differences between the new version and the next previous version. To recreate a particular version of the program, it is necessary to merge iteratively the versions previously created and the original program. The computer time required to perform such a merger increases at a greater than arithmetical rate due to the ever-increasing number of disk accesses required.

Summary of the Invention

It is therefore an object of the present invention to improve the overall performance of data processing library management systems.

It is another object of our invention to achieve this improvement while minimizing the amount of storage required for all versions of a document.

According to our invention, which we call the "Logical View" method, we use two types of files per document stored in the library system. One type of file contains control information to map out specific versions of the document, (typically the source code in the case of a computer program) which we call the "logical view control" (LVC). The LVC file comprises individual logical view (LV) files which contain control record data for each version of the document. For example, a program which has twenty versions would have associated with it stored in the library system twenty one LV files, one for each version as well as one for the original source code. The second file, which we term the "source data base" (SDB), includes the original source document and an appendage to the original document which contains delta records of any changed, added or inserted lines for each new version created.

Our library management system recreates a selected version of a document by sequentially processing control records from an LV file associated with and designated by the selected version.

As each control record is read, a modification (Line Status) field in the LV file is examined. In the preferred embodiment, a relative record position field is used to point at the next record to be read from the SDB file, and the count is used to set the number of records to be read. The records read from the SDB file are written to a temporary work (TW) file. This I/O processing loop continues until the last record in the LV section has been read, and the last SDB record has been written. When processing of LV file records is complete, the TW file containing the recreated source member is renamed and dispatched to the requestor.

Our method offers improved performance and reduced storage because only changed, added or inserted lines are appended to the end of the data base for the source document, with a new LV file created to point to the new lines of information. The number of control records making up each LV file is relatively small. Consequently, a minimal amount of storage is used because the full document is not retained for each version. The gain in performance is also significant because sequence numbers used in the standard delta approach are not required to merge the layers of "deltas" to create a version of a document. The reason for this is that the LV file (in any version level) is always processed sequentially to obtain the pointer to the appropriate document line for the associated version of the document. Only one or two disk accesses are required for each line to recreate any version of a document. This results in consistent performance no matter how many versions of a document exist.

The LVC file also offers another advantage in maintaining a history of the changes on a line-by-line basis in each LV file. This history contains, for example, a job which changed, added or deleted the line and may contain other information such as the programmer who made the change. A reference pointer to what the line previously looked like and other information may also be stored in the LV files of the LVC file.

Our invention also has applicability to business areas outside of computer program storage. It is useful in any area where numerous versions of a particular document exist. For example, our method allows efficient storage of and access to publications which are printed in different languages. In addition, changes in technical manuals, which become numerous as new versions of products are released, can be easily and economically managed.

Brief Description of the Drawings

The foregoing and other objects, aspects and advantages of our invention will be better understood from the following detailed description of a preferred embodiment with reference to the drawings, in which:

FIG. 1 illustrates the format and contents of a SDB file.

FIG. 2 illustrates the format and contents of an LV file of an LVC file.

FIG. 3 illustrates the recreation of a particular version level of a source document from the SDB file under control of an LV file.

FIGS. 4 and 5 are flow diagrams of the creation of a source document (element) (CREATELM).

FIG. 6 is a flow diagram of the recreation of a source document (RECREATE).

FIG. 7 is a flow diagram of the processing of a returned source document (PSRCELM).

FIG. 8 is a flow diagram of the creation of an initial LV file (CRINITLV).

FIG. 9 is a flow diagram of the creation of an initial SDB file (CRINITSDB).

FIG. 10 is a flow diagram of the creation of a new LV file and of an updated SDB file (CRNEWLV).

FIG. 11 is a flow diagram of the building of an LVC and an updated SDB file (BLDLVSDB).

FIG. 12 is a flow diagram of the method for processing matched lines (MATCH).

FIG. 13 is a flow diagram of the method for processing deleted lines (DELETE).

FIG. 14 is a flow diagram of the method for processing inserted or changed lines (INSERT).

FIG. 15 is a flow diagram of the method for building LVC files (BLDLVC).

3

FIG. 16 is a flow diagram of the process for adding changed or inserted lines to the SDB file - (ADDTOSDB).

FIG. 17 is a flow diagram of a method for compressing an LV file (COMPLVC).

FIG. 18 is a flow diagram of the method for verifying a new LV file and updated SDB files (VERIFY).

Description of the Preferred Embodiment

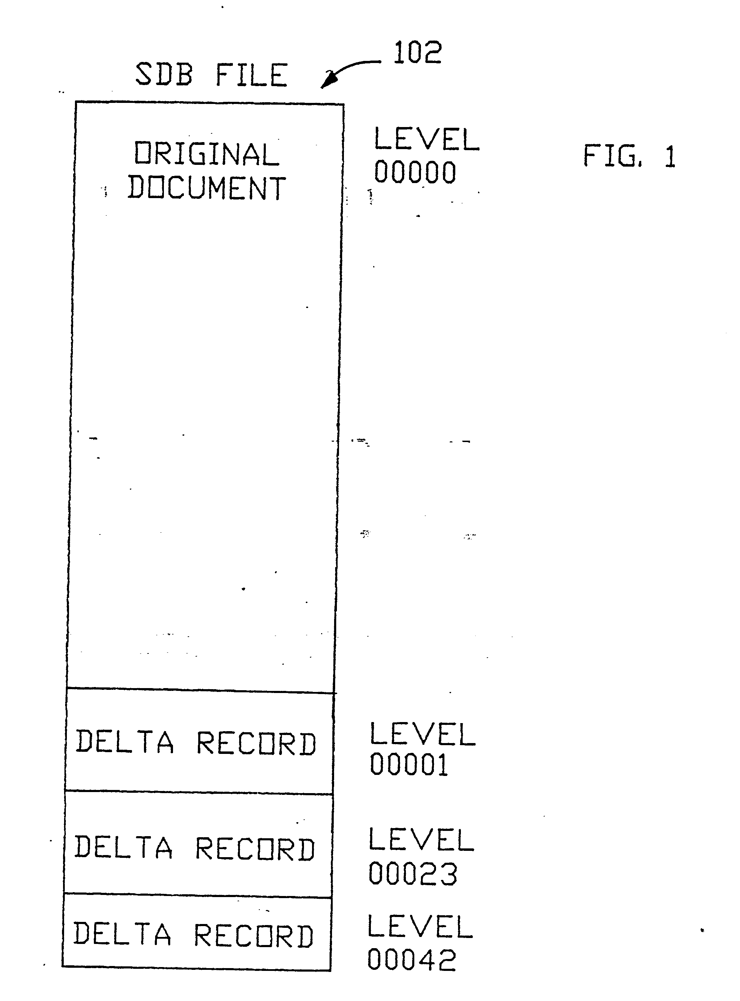

FIG. 1 shows the format and contents of the SDB file as it is stored in the memory, preferably disk memory, of a computer. The SDB file 102 comprises the original document, termed level 00000, as well as other delta records which are representative of different versions of the document as compared to the original document. Each delta record is either a changed or inserted line as applied to the SDB file.

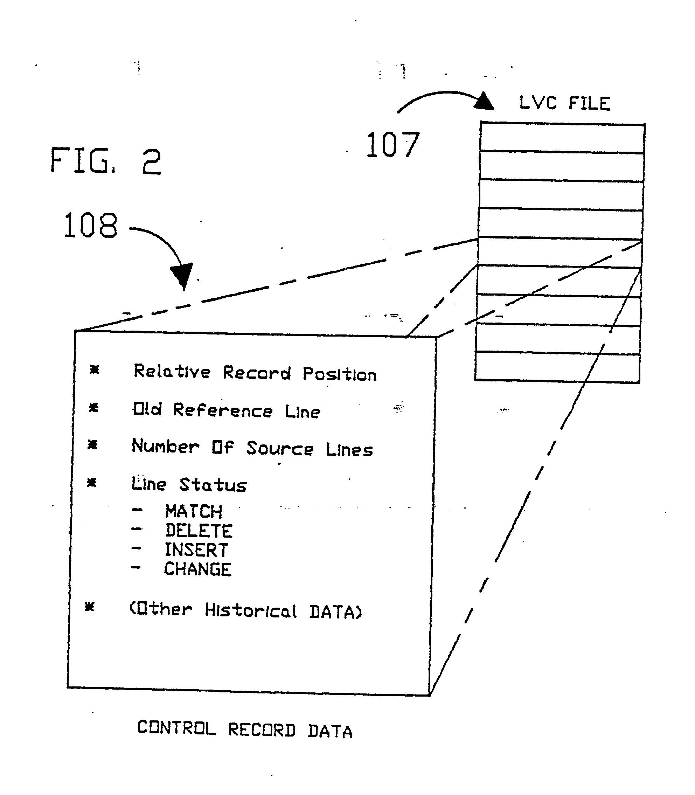

FIG. 2 illustrates the format and contents of the LVC file 107. An LV file 108 is a set of control record data representing a specified version of a source document. The control record data is used to direct a sequence of record retrievals when the specified version is recreated. Each LV file of the LVC file contains the following fields of information:

(1) the Relative Record Position of the first source line for each subset of sequential records which have the same type of modification (Line Status);

(2) the record positions in the SDB file of changed lines (C) termed the Old Reference Line;

(3) a count of the sequential relative records in each subset, termed the Record Count; and

(4) the type of modification comprising each subset. These modifications are indicated in the Line Status field and may be indicative of matched lines (M), deletions (D), insertion (I), or changed lines (C);

(5) each control record may also contain other historical data which is optional with the user or programmer.

In creating a LV file, control information is carried forward from a selected previous LV file. In our preferred embodiment, it is the next previous file, e.g., LV≠43 is created using control information contained in LV ≠ 42.

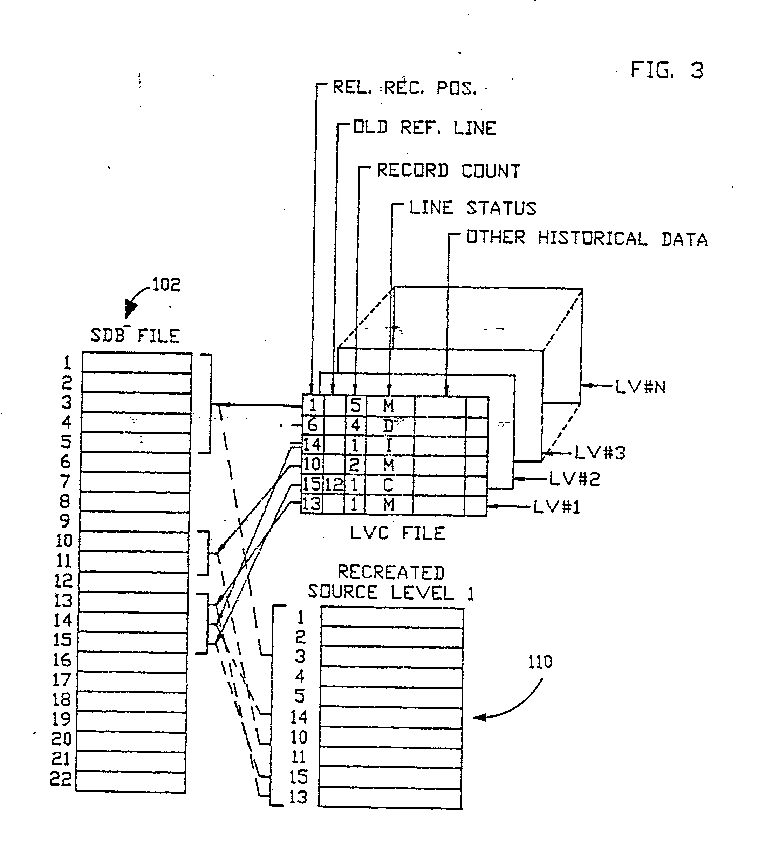

FIG. 3 illustrates the recreation of a selected version level of a document from the SDB file 102 under control of a particular LV file of LVC file 107. FIG. 3 provides an overview of the operation; more specific details of the operation will be given with respect to the flow diagrams which constitute the remaining figures in this specification.

The SDB file for an original document, Level 00000, has a LV≠0 file associated therewith (not shown), which is created during initial load processing. In addition, a new LV file is created each time a modified source document is returned to our library management system. An unlimited number of LV files may be in a LVC file. Each LV file represents the difference between a particular version of the document and the base, which may be the original or another version obtained by the user. In this way our library management system may recreate any version of a source document.

A version level of a document is recreated by sequentially processing the control records from the LV file designated by the specified source version. As each control record is read, the Line Status field, which indicates the type of modification, is examined. The relative record position (REL.REC.POS.) is used to point at the next record to be read from the SDB file. The Record Count is used to set the number of records to be read. In our preferred embodiment, the records which are read from the SDB file are written to a temporary work (TW) file. This I/O processing loop continues until the last LV record has been read and the last SDB record has been written. When the processing of all of the relevant LV records is complete, the TW file containing the recreated version is dispatched to the requestor.

Referring again to FIG. 3, as an example assume that source level 1 of a document 110 is to be recreated using the SDB file 102 and the LV file of the LVC file indicated as LV 1. In this example, the original document, level 00000, is stored in position 1 through 13 of SDB File 102. The delta record for level 00001 of the document is stored in positions 14 and 15.

In operation, REL.REC.POS.1 (the first LV record) is read. The Line Status indicates that there is a match (no difference) between the first five records of source level 1 and the original document (level 00000). In this case the program may position for a read operation on position 1 in the SDB file or, alternatively, read the five records indicated in the Record Count from the SDB file 102 and write them to the TW file. Next, REL.REC.POS.6 (the second LV record) is read. The Line Status indicates that this is a deletion (D). The Record Count shows that records 6 through 9 in source level 00000 are deleted from source level 1. No processing is involved for deleted records at this point.

4

REL.REC.POS.14 (the third LV record) is read next. The Line Status indicates that this record is attained from Delta Record 00000 and inserted (I) in source level 1. It is positioned for a read operation on record 14 in the SDB file and one record, as indicated by the Record Count, is read from the SDB file and stored in the sixth position in the TW file. The fourth LV record, having REL.REC.POS.10, is read next. The Line Status and Record Count indicate that there is a match (M) between source level 00000 and source level 1 and that records 10 and 11 are unchanged.

REL.REC.POS.15 (the fifth LV record) is read next. The Line Status indicates that this is a changed record (C). Old Reference Line indicates that the change affects record 12 in source level 00000. Record 12 is changed to record 15 which is stored in Delta Record 00001 of SDB file 102. A read operation is performed on record 15 in the SDB file and record 15 is read from the SDB file 102 and stored in the TW file of the recreated source level. REL.REC.POS.13 (the sixth LV record) is read next. The Line Status indicates that this is a match between the source levels. This is positioned for a read operation on record 13 in the SDB file and a single record is read from the SDB file and stored in the TW file. At this point the operation is complete and the TW file containing the recreated source level number 1 may be sent to the requestor.

From this overview, it can be seen that the invention comprises a very efficient way of both storing the various versions of a document and also of recreating with a minimal number of accesses a particular version level of the document from the SDB file which contains the document and any modifications made thereto. Specific steps in our invention are discussed with respect to the remaining figures.

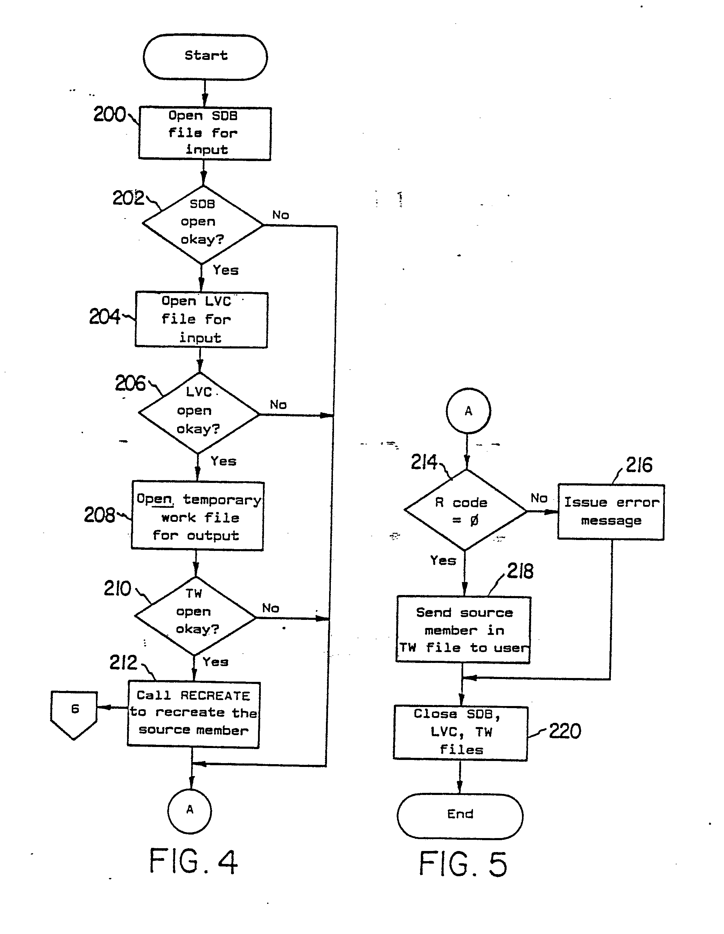

FIGS. 4, 5 and 6 illustrate the main control routines, termed CREATELM and RECREATE, which recreate and retrieve a source document at a specified version level. The CREATELM routine initializes the library files and TW files used to recreate the source document. The RECREATE routine is called to actually build the specified version of the source document in a TW file. In these drawings, the usual flow diagram conventions are followed. Specifically, a diamond-shaped block represents a logical operation, such as a test or compare function, and a rectangular-shaped block represents a step in a sequence of steps such as load, save and the like. A quasi-elliptical block represents the beginning, end or a point of interruption in a program. A circle is used as a connector to designate an entry from, or an exit to, another part of the program flow chart; and a pentagon is used as a connector instead of the circle to designate entry to or exit from a page of drawing.

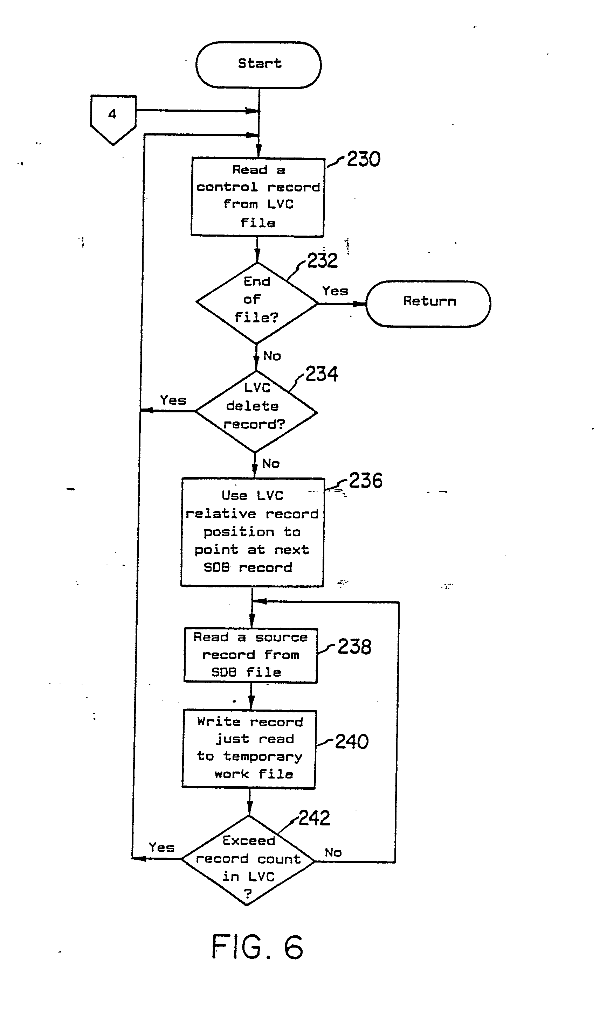

In FIG. 4, the program starts by opening the SDB file to receive an input in block 200. A decision is then made in decision block 202 as to whether the SDB has opened properly. If the answer is yes, the LVC file is opened for input as shown in block 204 and a decision is made as to whether the LVC file has opened properly. If the answer is yes, the TW (TW) file for an output and a decision is made in block 210 as to whether the TW file has opened properly. If the answer is yes, the RECREATE routine (FIG. 6) is called to recreate the selected version (source member).

When this is accomplished, or if the answer in any of the decision blocks 202, 206, 208 or 210 is no, the program then proceeds to connector A in FIG. 5. A decision is made by means of an R (Return) code in decision block 214 as to whether the program has successfully completed its task. If the decision is yes, the source member already in the TW file is sent to the user as shown in block 218. If the program has failed, the system issues an error message at block 216, such as "Recreate not normal". The process then proceeds to block 220, ending the program.

If the SDB, LVC and TW files have been opened appropriately, the program proceeds to the RECREATE routine (FIG. 6). As previously discussed, our library management system recreates a selected version level of a source document by sequentially processing control records in the LVC file from a selected LV file designated by the selected version level. The routine starts by reading a control record from a selected LV file in the LVC file as shown in block 230. A decision is made in decision block 232 as to whether the program has reached the end of the file. If the answer is yes, the program returns to the Calling routine (FIG. 4). If the answer is no, the program proceeds to decision block 234 in which the program determines whether the Line Status indicates a delete (D) record. If the answer is yes, the program returns to read another control record from the LV file as shown in block 230. If the answer is no, i.e., if the Line Status of the record indicates an insert (I), a match (M) or a change (C), the relative record position - (REL.REC.POS.) of that record is used to point at the next record in the SDB file as shown in block 236. The program then proceeds to read that source record from the SDB file, block 238; and that record is written to the TW file, block 240. At that point the program determines, in decision block 242, whether the record count in the LV file for the particular modification type subset has been exceeded. If the answer is no, the program reads another source record from that subset until record count is exceeded. If the answer is yes, the program proceeds to read another control record in the next such subset from the LV file. At the termination of the RECREATE routine, the recreated document is made available to the requestor.

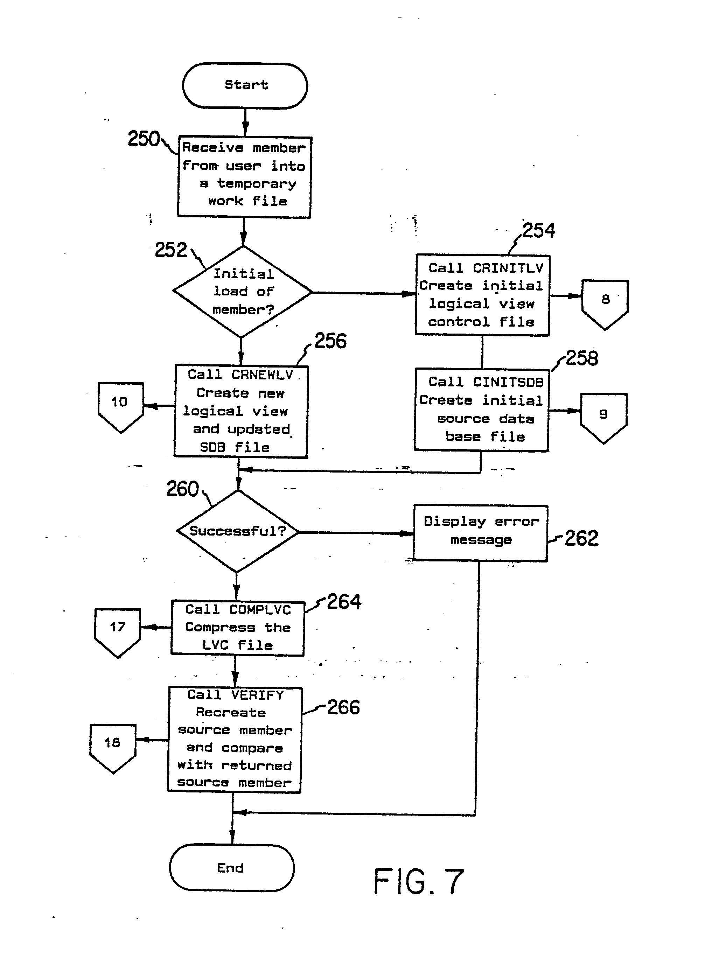

FIG. 7 illustrates the method by which a new version level of an original document (member) is processed into the library management system when it is received from a user. It is termed the Process Return Source Element routine (PSRCELM). This is a main control routine for creating both a new or updated SDB file as well as a new LV file in the LVC file in the library management system. PSRCELM calls the routines illustrated in the remaining figures either directly or indirectly to perform its functions.

If the original source member is being loaded into the library machine for the first time, the entire document is stored as a level 00000 SDB file, and a new LV 0 file is created. The LV $\neq$ 0 file consists of one control record indicating that all source records are a match (M) beginning with REL.REC.POS.1.

The Record Count totals the number of records in the original document.

For documents previously obtained from the library, and now being returned with modifications, the SDB file is updated with the modifications appended to the end of the SDB file as a Delta Record. A new LV file is created consisting of control records which map the modifications made and the location of the records in the SDB file. The LV file is also compressed by combining sequential control records having the same modification type, thus reducing the number of LV records. The updated SDB and new LV file are then verified for correctness by recreating the source document and comparing it with the returned document.

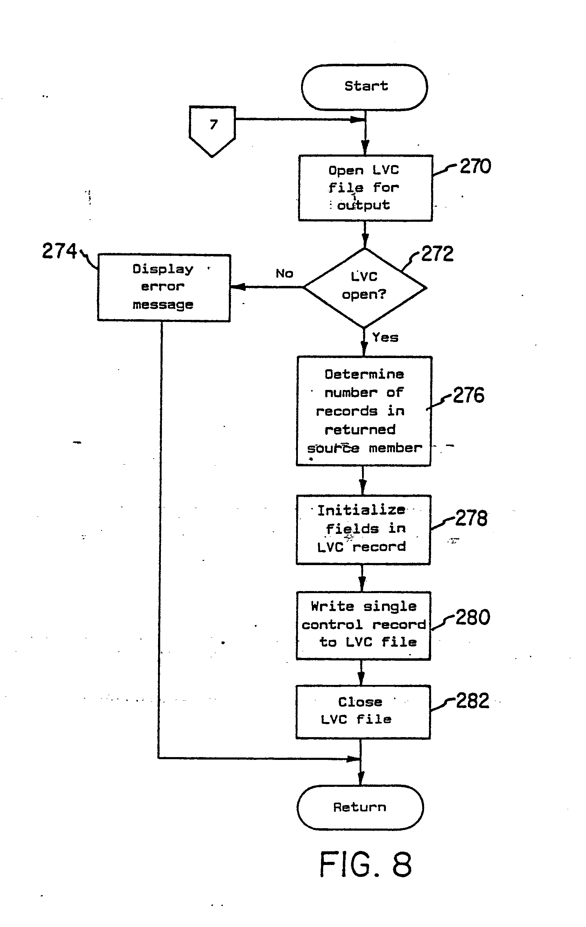

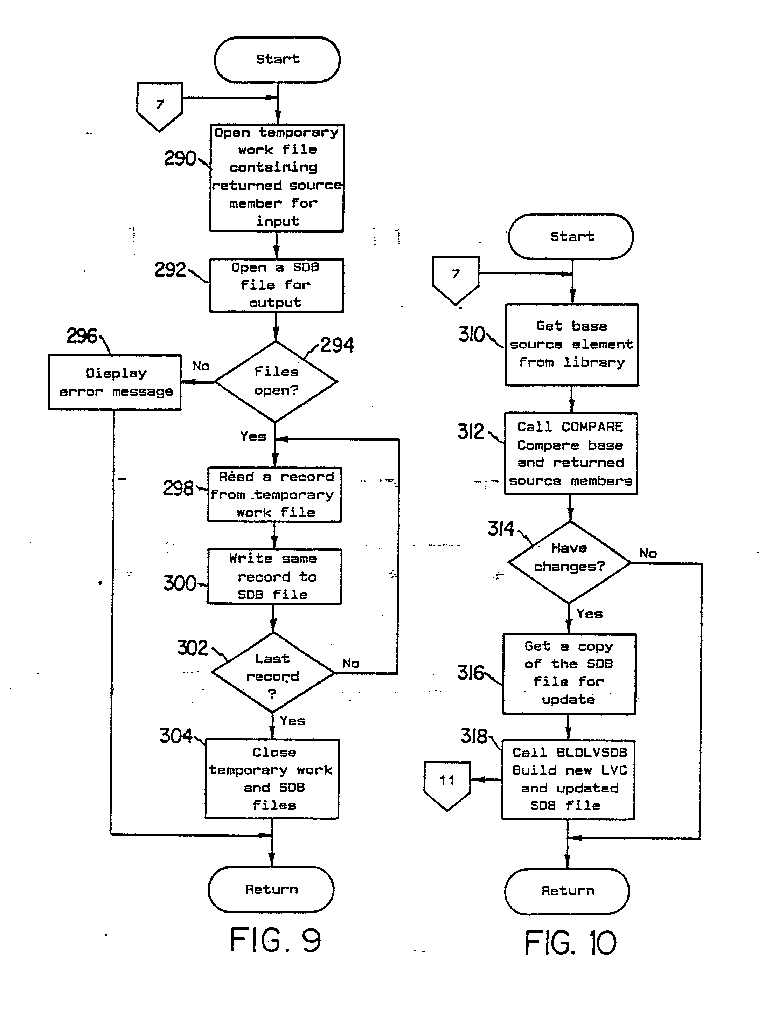

Turning again to FIG. 7, the document is received from the user into a TW file as shown in block 250. A decision is then made in decision block 252 as to whether this is the initial loading of the document by the user. If the answer is yes, the CRINITLV routine is called to create an LVC file and LV file ≠0 which is further discussed with respect to FIG. 8. In addition, as shown in block 258, the CINITSDB file is called to create an initial SDB file (FIG. 9). If the answer is no, the routine calls the CRNEWLV routine to create a LV file and an updated SDB file, which routine is discussed with respect to FIG. 10.

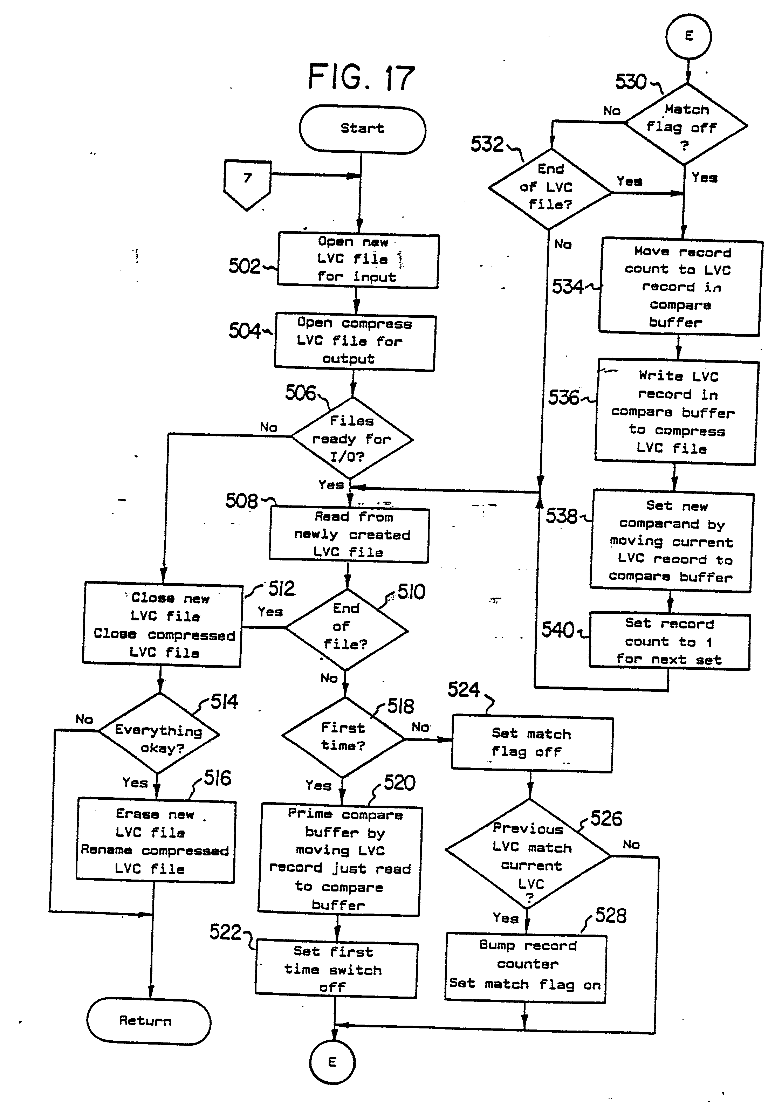

After either the initial or the new LV file and the new or updated SDB file are created, a decision is made as to whether the routine has been successful as shown in decision block 260. If the answer is no, an error message is displayed as shown in block 262 and the program terminates. If the answer is yes, the routine COMPLVC is called as shown in block 264 which functions to compress the particular LV file of the LVC file. COMPLVC is discussed with respect to FIG. 17.

After compressing the LV file, the VERIFY routine, discussed with respect to FIG. 18, is called to recreate the original source document and compare the recreated source document with the returned source document as shown in block 266. The PSRCELM routine of FIG. 7 then terminates.

FIG. 8 describes the CRINITLV routine which is used to create the initial LV file for the level 00000 document, i.e., the original source document. The program enters from FIG. 7, and the LVC file is opened to receive an output as shown in block 270. If the LVC file does not open properly, an error message is displayed as shown in block 274, and the program returns to the calling routine. If the LVC file opens properly, a determination is made as to the number of records in the returned source member as shown in block 276; and the fields in the LVC file are initialized as shown in block 278 to create LV≠ 0. In this initial LV file REL.REC.POS. position is set at one. The record count is set equal to the number of source records and the Line Status is set at M for match. The program proceeds to block 280 wherein a single control record is written to the LV file. Then the LVC file is closed as shown in block 282 and the program returns to the calling routine (FIG. 7).

Fig. 9 is the CRINITSDB routine which creates the initial SDB file, level 00000. The program enters from FIG. 7 and a TW file containing the returned document (source member) is opened as shown in block 290. A SDB file is also opened to receive a TW file for output as shown in block 292. A decision is made as to whether the files have been opened properly in decision block 294. If the answer is no, an error message is displayed and the program returns to the Calling routine (FIG. 7). If the answer is yes, a record is read from the TW file as shown in block 298 and the same record is written to the SDB file as shown in block 300. A decision is made in block 302 as to whether this is the last record to be stored in the SDB file. If the answer is no, the program loops through blocks 298, 300 and 302 until all the records have been written. When this occurs as shown in block 304, the TW and SDB files are closed and the program returns to the Calling routine (FIG. 7).

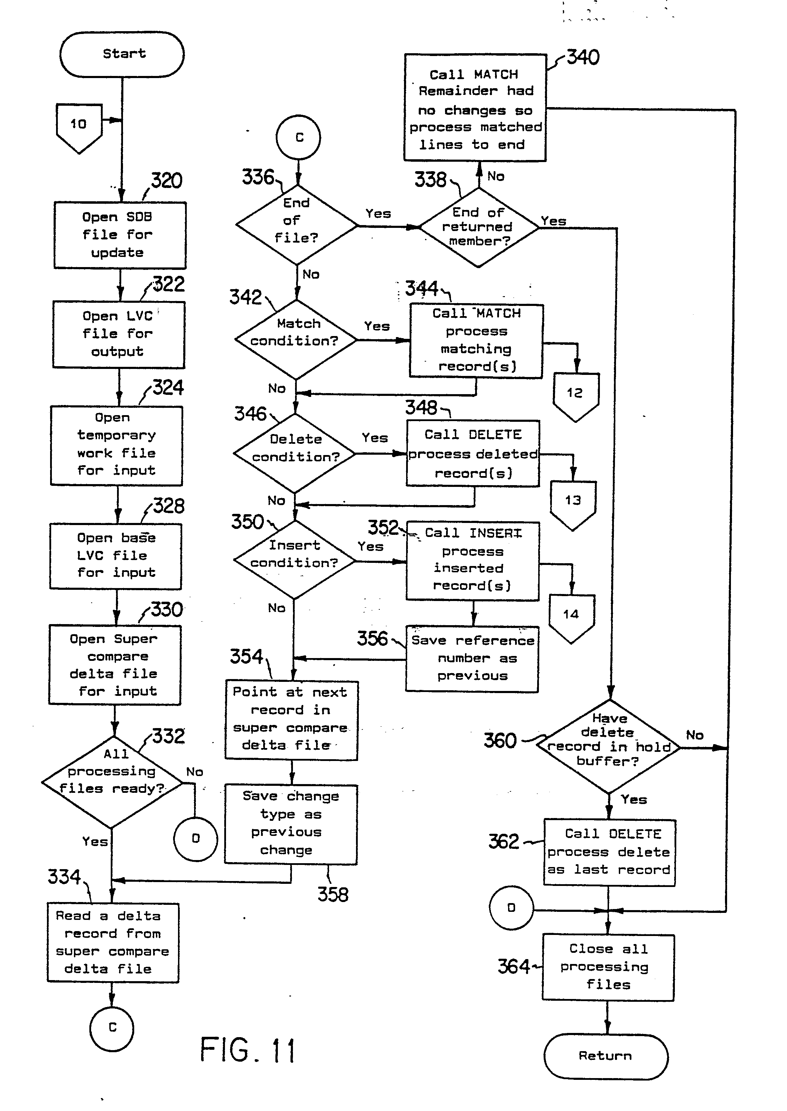

FIG. 10 illustrates the CRNEWLV routine which creates a new LV file and an updated SDB file for a returned document. The program is entered from FIG. 7 and the base source element is obtained from the library management system. A SUPERC routine is then called to compare the original (base) and the returned source documents as shown in block 312. This routine is further discussed with respect to FIG 11. A decision is then made in decision block 314 as to whether there are any changes made. If the answer is no, the program returns to the Calling routine (FIG. 7). If the answer is yes, a copy of the SDB file is obtained for updating as shown in block 316 and the BLDLVSDB routine is called to build a new LVC and updated SDB file, which will be described with respect to FIG. 11.

In FIG. 11 the SDB, LVC and TW files are opened as shown in blocks 320, 322 and 324. The LV file is opened for input as shown in block 328. A SUPERCOMPARE delta file is also opened for input as shown in block 330. Our library management system uses the IBM Source Compare/Audit Utility Program (referred to as SUPERC or SUPERCOMPARE) to compare two files for differences. The differences, in the form of DELDD control statements, are inspected and related to the development process involved in going from one level of source code to another (supplemental information describing the DELDD file generated by SUPERC is given in the Appendix at the end of this specification). This Utility Program is commercially available from the International Business Machines Corporation as Program Number 5796-PLZ. A Program Description/Operations Manual is also available as manual no. SH20-2361. We could use any similar compare utility program to perform this function, which forms no part of our invention. At this point, a decision is made in decision block 332 as to whether all processing files are ready. If the answer is no, the program proceeds to block 364 through connector D, all processing files are closed and the program returns to the Calling routine (FIG. 10). If the answer is yes, the program proceeds to block 334 through connector C and a delta record is read from the SUPERC delta file as shown in block 334.

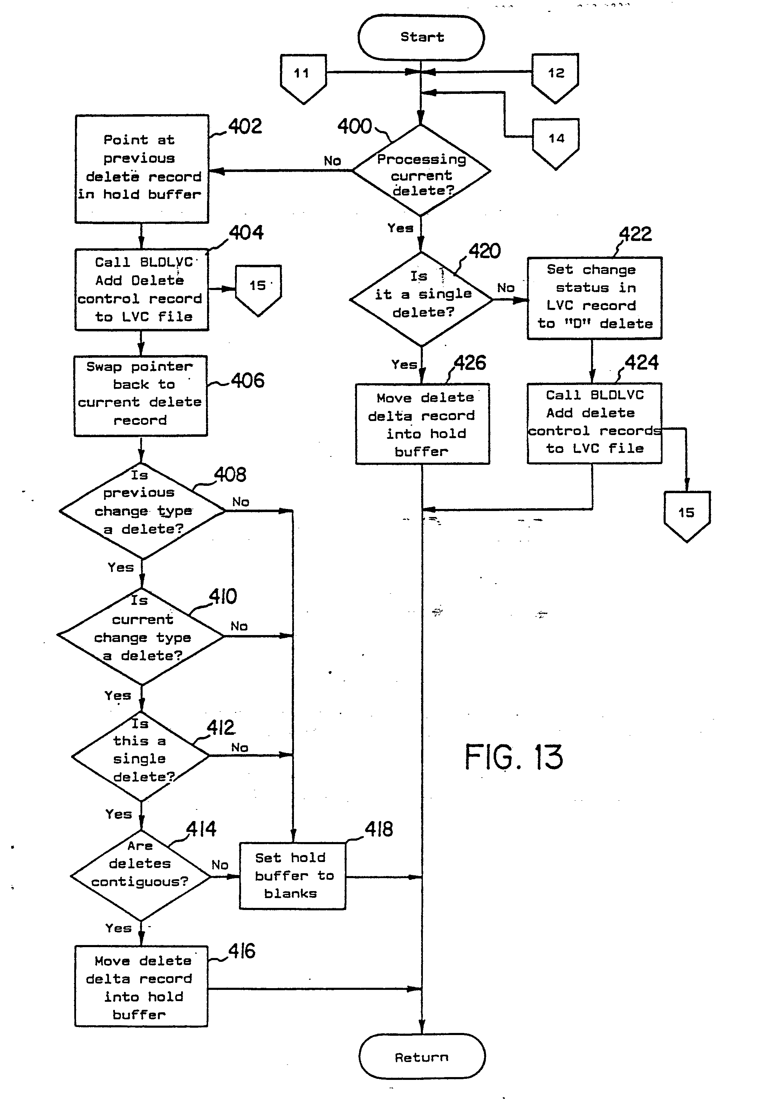

A decision in decision block 336 is then made as to whether this is the end of the delta file. If the answer is yes, a decision is made as to whether this is the end of the returned document (member) in decision block 338. If the answer is yes, a decision is made as to whether there is a Delete record in the hold buffer in decision block 360. If the answer is yes, the DELETE routine (FIG. 13) is called to process the deletion as the last record as shown in block 362. If the answer in decision block 360 is no, the program proceeds to block 364.

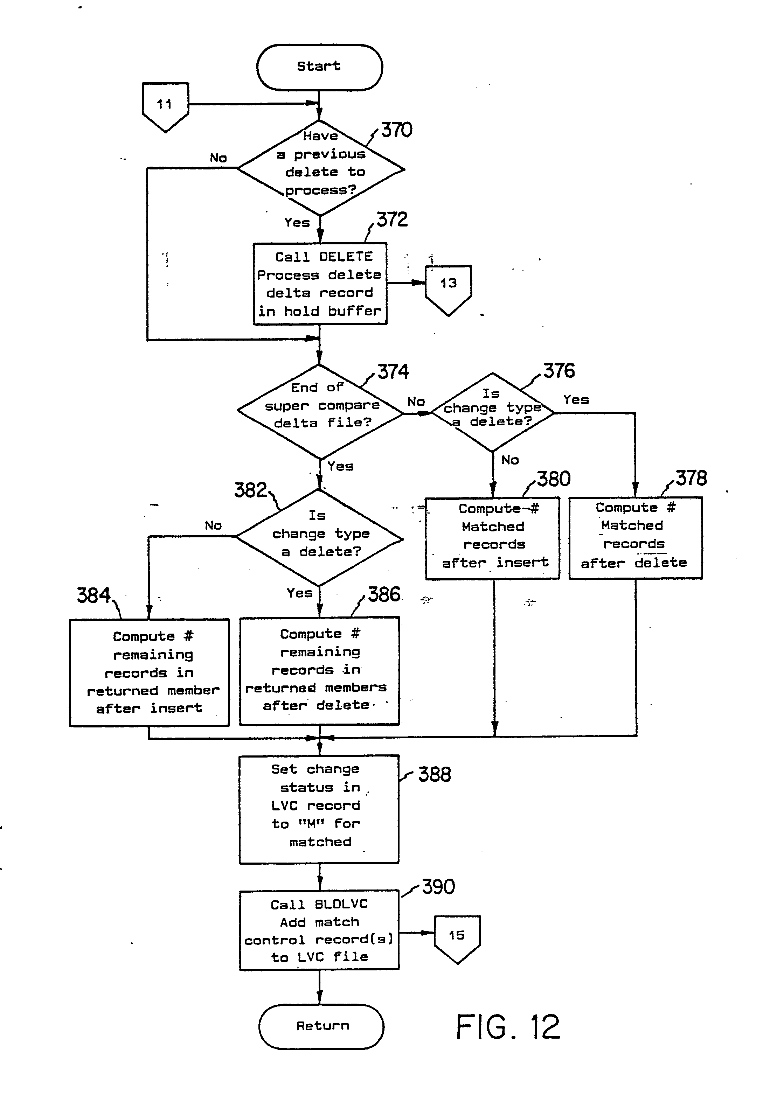

If a decision is made in decision block 338 that this is not the end of a returned document, the MATCH routine (FIG. 12) is called, indicating that the remaining lines had no further changes so that the process matched the lines to the end of the document. The processing files are closed as shown in block 364 and the program returns to the Calling routine (FIG. 10).

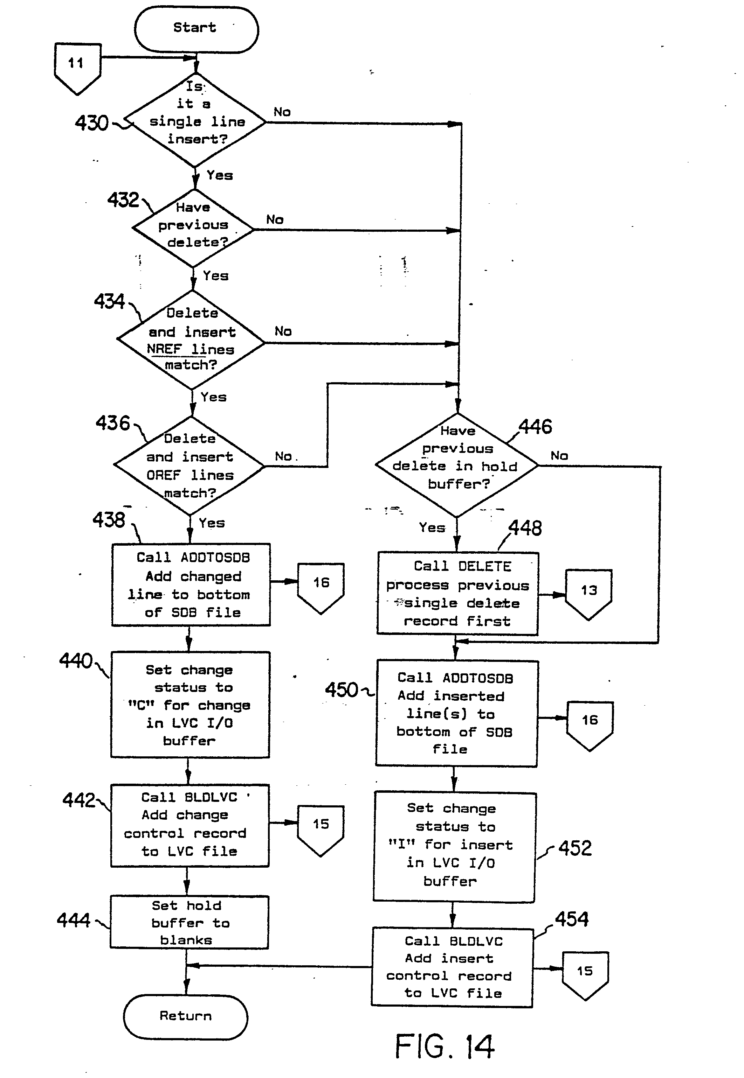

Returning to decision block 336, if a decision is made that the end of the delta file has not been reached, a decision is made as to whether the record is a Match condition. If the answer is yes, the MATCH routine (FIG. 12) is called to process matching records as shown in block 344. If the answer is no, a decision is made in decision block 346 as to whether the record is a Deletion. If this answer is yes, the DELETE routine (FIG. 13) is called to process deleted records as shown in block 348. If the answer in block 346 is no, a decision is made in decision block 350 as to whether an Insert condition occurs in that record. If the answer is yes, the INSERT routine (FIG. 14) is called to insert the records as shown in blocks 352 and 356. Upon completion of this step or if the answers to the decisions in blocks 342, 346 and 350 are all no, the next record in the SUPERC delta file is pointed at, as shown in block 354. The program then saves the type of modification as being a previous change as shown in block 358 and the program returns to block 334 where another delta record is read from the SUPERC delta file.

FIG. 12 illustrates the MATCH routine, which processes matched lines. The program is entered from FIG. 11; and a test is made as to whether there is a previous deletion to process, as shown in decision block 370. If the answer is yes, the DELETE routine is called (FIG. 13) and the delta record to be deleted is processed as shown in block 372. If the answer is no, a test is made in decision block 374 as to whether the LV file is at the end of the SUPERC delta file. If the answer is no, a test is made in decision block 376 as to whether the type of modification is a deletion. If the answer in block 376 is yes, the number of matched records is compared after the deletion is accomplished as shown in block 378. If the answer in block 376 is no, the change must be an insertion of a record; and the number of matched records after the insertion is computed as shown in block 380. Upon completion of the steps in blocks 378 and 380, the Line Status in the LV file of the LVC file is set to M for match as shown in block 388.

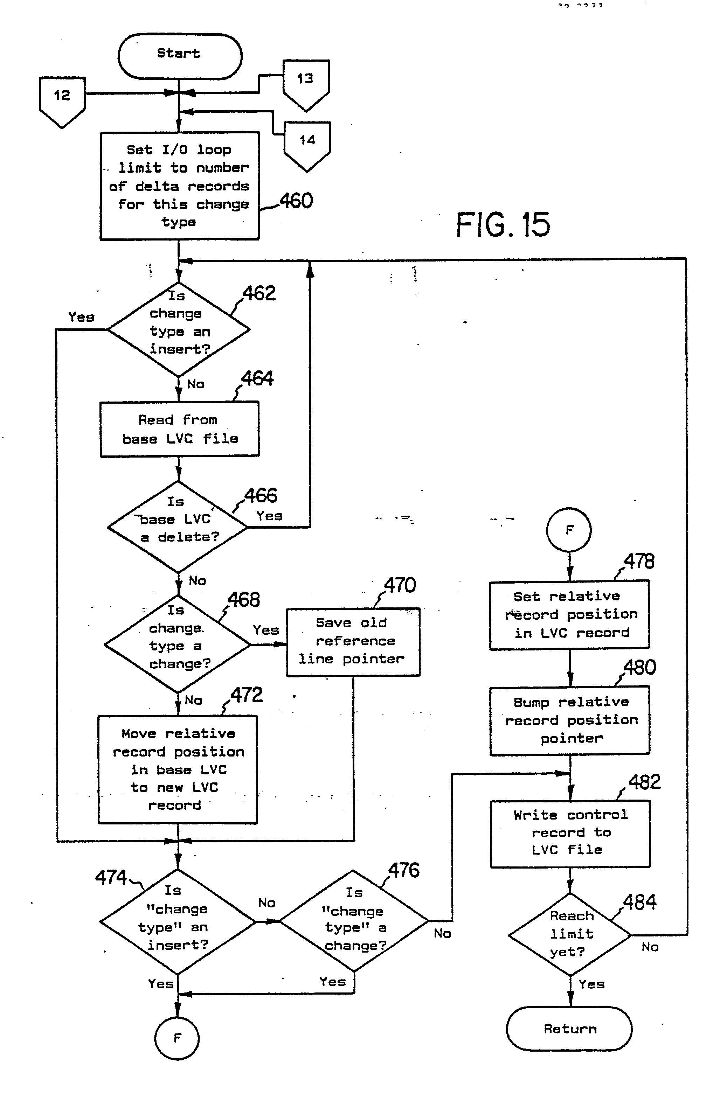

Returning to decision block 374 if the answer is yes, a test is made as to whether the type of modification is a deletion as shown in decision block 382. If the answer is no, the change must be an insertion and the number of remaining records in the returned document (member) after the insertion is computed as shown in block 384. If the answer is yes in decision block 382, the number of remaining records in the returned document after the deletion is computed as shown in block 386. After the completion of the computations in blocks 384 and 386, the Line Status of the LV file in the LVC file is set at M for match as shown in block 388. The routine continues by calling the BLDLVC routine, which builds LVC files to add the matched control records to the LV file in FIG. 15. When this process is completed, the MATCH routine returns to the Calling routine (FIG. 11).

FIG. 13 illustrates the DELETE routine which processes deleted lines. As illustrated in FIG. 13, the DELETE routine may be called by the BLDLVSDB routine, the MATCH routine or the INSERT routine, FIGS. 11, 12 and 14, respectively. As shown in decision block 400, a test is initially made to determine whether the routine is processing a current deletion. If the answer is yes, a test is made in decision block 420 as to whether a single line is being deleted. If the answer is no, the line status in the LV file of the LVC file is set to delete (D) as shown in block 422 and the BLDLVC routine is called to add delete control records to the particular LV file of the LVC file. After the BLDLVC routine is completed, the DELETE routine returns to the Calling routine (FIG. 11).

Returning to decision block 420, if the answer is yes, the Delete delta record is moved into a hold buffer as shown in block 426 because this single delete line may be a changed line (C). At that point the routine returns to the Calling routine (FIG. 11).

Returning to decision block 400, if the routine is not processing a current deletion the routine points to the previous delete record which is in the hold buffer as shown in block 402; and the BLDLVC file is called to add a delete control record to the LV file of the LVC file in FIG. 15 as shown in block 404. After this is completed, the pointer to the previous delete record is changed to point back to the current delete record as shown in block 406. A decision is then made in decision block 408 as to whether the previous change type was a deletion. If the answer is yes, a decision is made in decision block 410 as to whether the current type of modification is a deletion. If the answer is yes, a decision is made in decision block 412 as to whether this was a single deletion. If the answer is yes, a decision is made in decision block 414 as to whether the deletions are contiguous in the lines of the record in the LV file. If the answer is yes, the delete delta record is moved into the hold buffer because a back-to-back deletion is possibly a reformatted line. The routine then returns to the Calling routine (FIG. 11). If the answer to any of the decisions in decision blocks 408, 410, 412 or 414 is no, then the hold buffer is set to blanks (cleared) as shown in block 418 and the routine returns to the Calling routine (FIG. 11).

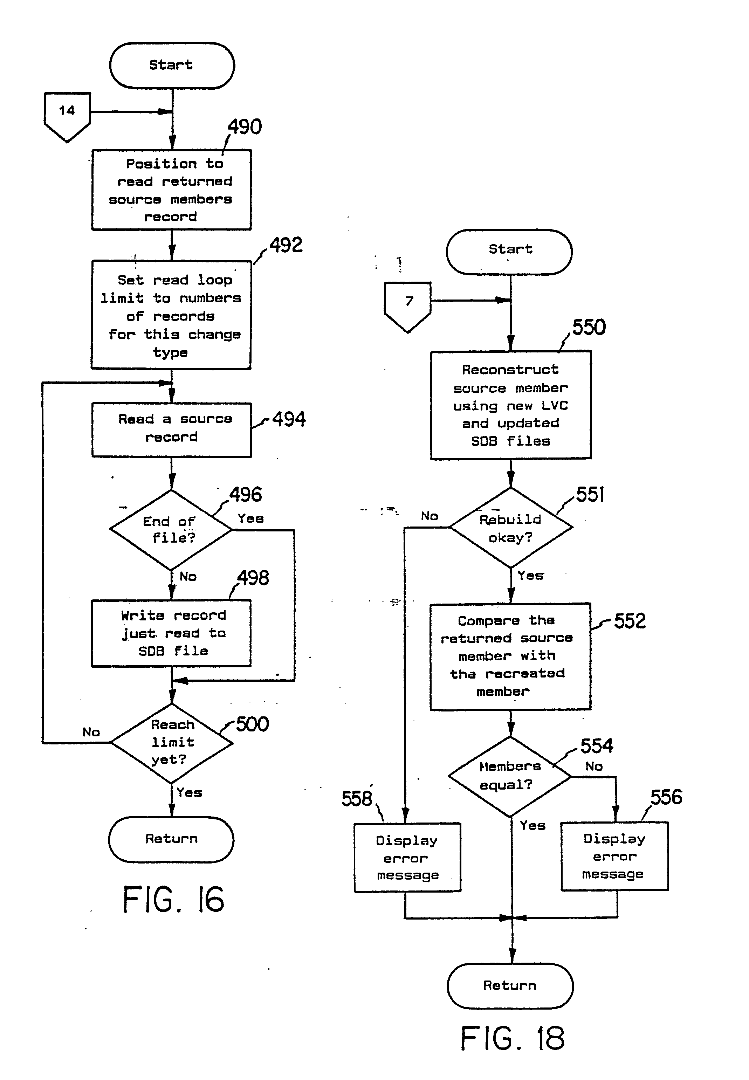

FIG. 14 illustrates the INSERT routine which processes the modifications of inserting or changing lines in a LV file. The INSERT routine is called by the BLDLVSDB routine (FIG. 11). The first steps in the process determine whether a particular line to be inserted is also a changed line (C). This is done in decision blocks 430, 432, 434 and 436 by deciding whether a deletion and an insertion are being done for the same line. If this is true, then that line must be a changed line. Otherwise the line is an inserted line (new). In decision block 430, a test is made as to whether a single line is being inserted. If the answer is yes, a check is made in decision block 432 as to whether there is a previous deletion in the LV file. If the answer is yes, a decision is made in decision block 434 as to whether the deletion and insertion new reference lines (NREF) match. If the answer is yes, a test is made in decision block 436 as to whether the deletion and insertion Old Ref. Lines (OREF) match. If the answer is yes, the line to be inserted represents a change in a line. The ADDTOSDB routine is called (FIG. 16) to add the changed line to the particular delta record being created at the bottom of the SDB file. In addition, as shown in block 440, the Line Status for that line is changed to C in the LVC I/O buffer. The BLDLVC routine in FIG. 15 is then called to add the change control record to the LV section of the LVC file. The entire buffer is then set to blanks as shown in block 44 and the program returns to the Calling routine (FIG. 11).

If any of the answers to the decisions made in blocks 430, 432, 434 and 436 is no, the conclusion is that the line under test is being inserted, but that no line is being changed. The remainder of the INSERT routine serves to handle these inserted lines. A test is made in decision block 446 as to whether there is a previous line to be deleted in the hold buffer. If the answer is yes, the DELETE routine is called (FIG. 13) to first process the previous single record to be deleted. The routine then proceeds to call the ADDTOSDB routine which also is called if the decision in decision block 446 is no. The ADDTOSDB routine (FIG. 16) adds the inserted lines into the delta record at the bottom of the SDB file in FIG. 16, as shown in block 450. The Line Status for that particular line is set to I for insertion into the LV section of the LVC I/O buffer as shown in block 452. The BLDLVC routine is then called (FIG. 15) to add the Insert control record to the LV file associated with the delta record. The program then returns to the Calling routine (FIG. 11).

FIG. 15 illustrates the BLDLVC routine which constructs each LV file of the LVC file (such as LV≠ 1 in FIG. 3). This routine may be called by the MATCH, DELETE and INSERT routines. The first step is to set a limit to the number of delta records for the subset of a particular type of modification, which may be added to the LV file as shown in block 460. After this limit has been set, the routine determines whether the modification is to be an insertion. If the answer is no, the next step is to read the next line from the LV of the "base" LV file as shown in block 464. The base LV file is the precursor to the LV file being constructed. For example, the precursor to LV≠15 may be LV≠14 or any other previous LV file, depending on which level of the SDB file the programmer or designer has changed.

After this step a decision is made in decision block 466 as to whether the modification is a deletion (D). If the answer is yes, the program returns to the beginning of the loop. If the answer is no, a decision is made as to whether the modification is to be a change (C) to the line. If the answer is no, the relative record position in the base LV file is moved to a record in the new LV file as shown in block 472. If the answer is yes, the old reference line (Old Ref. Line) pointer is saved as shown in block 470. The program then proceeds to decision block 474 where it is determined whether the modification is an insertion. If the answer is no, a decision is made as to whether the modification is a change, as shown in decision block 476. If the answer is no, a control record is written to the new LV file. If the answers to the questions in either deci-sion block 474 or 476 is yes, the relative record position in the LVC record is set as shown in block 478. The relative record position pointer is bumped, i.e., moved one place as shown in block 480. The program then proceeds to block 482 where a control record is written to the new LV file. A decision is then made in decision block 484 as to whether the limit previously set in block 460 has been reached yet. If the answer is no, the program loops back to decision block 462. If the answer is yes, the program returns to whichever routine called it.

FIG. 16 illustrates the ADDTOSDB routine which adds changed or inserted lines to the SDB file 102 as a delta record. The routine is called by the INSERT routine. The first step, as shown in block 490, is to position the program to read the record of the returned source member (document). The read loop limit is set to the number of records for the type of modification ("change type") to be made, whether a change - (C) or insertion (I), as shown in block 492. A source record is read as shown in block 494 and a decision is made in decision block 496 as to whether this is the end of the file. If the answer is no, that source record is read into delta record of the SDB file as shown in block 498 and a decision is made in block 500 as to whether the limit has been reached yet. If the answer is no, the program returns to block 494 to read the next source record. When the end of that particular file is reached in decision block 496, a decision is also made as to whether the limit to the number of records for that particular modification ("change type") is made in decision block 500. When the limit has been reached, the program returns to the Calling routine - (FIG. 14).

FIG. 17 illustrates the COMPLVC routine which compresses the number of records in an LV section. This routine is called by the PSRCELM routine, which processes returned source elements. The routine begins by opening a new LV file and a new "compress" LV file of the LVC file for input and output, respectively, as shown in blocks 502 and 504. A decision is made in decision block 506 as to whether the files are ready for input/output. If the answer is yes, a line is read from the newly-created LV file as shown in block 508. A decision is then made in decision block 510 as to whether this is the end of the file. If the answer is no, a decision is made in decision block 518 as to whether this is the first time this file has been read. If the answer is yes, the compare buffer is primed by moving a record in the LV file to the compare buffer. After this is done the "first-time" switch is set to the "off" position as shown in block 522 and the program proceeds to connector E.

Returning to decision block 518, if the answer is no, the match flag condition is set to the "off" position as shown in block 524 and a decision is made as to whether the previous LV file matches the current LV file of the LVC file. If the answer is yes, the record counter is bumped one position and the match flag is set to the "on" position. If the answer in decision block 526 is no, the program proceeds directly to connector E.

Proceeding to connector E, a decision is then made as to whether the match flag has been set to the "off" position. If the decision is yes, the record count is moved to the LV in the compare buffer as shown in block 534. The LV record is written to the compare buffer to compress the LV file as shown in block 536. Then, a new comparand is set by moving the current LV record to the compare buffer as shown in block 538, and the record count is set to "one" to initiate the next set as shown in block 540. Returning to decision block 530, if the answer is no, a test is made in decision block 532 as to whether this is the end of the LV file. If the answer is no, the program proceeds to connector F. If the answer is yes, the program proceeds to reinstitute the steps in blocks 534, 536, 538 and 540 to again arrive at connector F.

The program then returns to block 508 where another record is read from the newly-created LV file. A decision is then made as to whether this is the end of the file. If the answer is yes, the new LV file and the new compressed LV file are both closed and a test is performed in decision block 514 as to whether the appropriate closures have been made. If the answer is yes, the LV file is erased and the compressed LV file is renamed to take the place of the LV file. If the answer in decision block 514 is no, the program also returns to the Calling routine (FIG. 7).

FIG. 18 illustrates the VERIFY routine which verifies the accuracy of a new LV file and the updated SDB file. The routine is called by the PSRCLM routine (FIG. 7). In the first step the source document is reconstructed using the new LV file and the updated SDB files as shown in block 550. A test is then made in decision block 551 as to whether the rebuilding step has occurred properly. If the answer is no, an error message is displayed as shown in block 558. If the answer is yes, the returned source document is compared to the recreated member as shown in block 552. A decision is then made in decision block 554 as to whether the members are equal line-for-line. If the answer is no, an error message is displayed, and the program returns to the Calling routine (FIG. 7). If the answer is yes, the program returns directly to the Calling routine.

APPENDIX DELDD FILE FORMAT

The DELDD file is a data set with the following charac-teristics:

```
    Record Type    PS
    RECFM          FB
    LRECL          148
    BLKSIZE            5920  The data structure is
  1 DELDD        char(148),
    3 ID          char(2),       /*'D ' or 'I ' for Delete or
                                  Insert */
    3 NUM         fixed(16)      /* ≠ of related dels or inserts */
    3 NREF        fixed(16),     /* Reference point of new file */
    3 OREF        fixed(16),     /* Reference point of old file */
    3 LSTMTCH     char(8),       /* Last match seq/ (old) */
    3 TXT         char(132),     /* Start of text record */
      5 CARD      char(80);
```

For every delete or insert occurrence between comparison data sets, one record can be found in the DEL file. Additionally, sufficient control information is appended to the front of each record so that further application processing may be easily performed.

The ID field identifies each record entry as belonging to the new or old file. Deletes are old file records not contained in the new file. Inserts are new file records not found in the old file. NREF and OREF are references to the applicable points within each file.

A delete with a NREF=25 means that this old file ·record was deleted from the new file between records 24 and 25. An insert with a LREF=25 means that the new file record 25 was not found in the old file. Similarly, OREF pertains to the old file point of reference excepting the meaning of deletes and inserts are reversed.

Fixed (16) is halfword binary.

NUM is the number of deletes or inserts which compare a block change. The header block record contains a valid number while succeeding block records have a NUM count of zero.

LSTMTCH is the 8 character sequence field from columns 73-80 of the last old file record that matched. It will be binary zero if no matches had occurred prior to the first change record.

The line text data starts in column 17 and extends or is padded to column 148.

The DELDD file is generated whenever there is a changed line and the list option is either LONG, SHORT, CHNG, or DELTA. No DELDD file is generated for the OVSUM option.

The invention has been described with respect to a preferred embodiment thereof, but it will be understood by those skilled in the art that changes may be made therein without departing from the spirit and scope of the invention.

## Claims

1. In a data processing system, a method for storing a document and information concerning one or more modified versions of said document comprising the steps of:
storing the document and delta records thereof;
establishing a separate logical view file containing control records which may be used to construct a selected modified version.

2. A method as in claim 1 wherein said logical view file comprises:
the relative record position of the first line for each subset of sequential records which have the same type of modification;
the record position in said document of the first changed line;
a count of the sequential relative records in each said subset; and
the type of modification comprising each subset.

3. A method as in claim 2 wherein said types of modifications comprise:
matched lines, deletions, insertions, and changed lines.

4. A method as in claim 2 further comprising the steps of:
sequentially processing the control records in the logical view section associated with a selected modified version; and
selectively retrieving information in said original version and said delta records under control of said logical view file so as to recreate said selected modified version.

5. A method is in claim 2 wherein said logical view file further comprises information concerning a history of selected delta records.

6. A method is in claim 1 wherein said delta records are appended to said original version.

7. In a data processing system for storing and retrieving a document and modified versions thereof:
means for storing said document;
means for storing delta records of said document;
means for storing control records related to each said modified version of said document indicative of the specific differences between said document and said modified version thereof.

8. A system as in claim 7 wherein said control records comprises:
the relative record position of the first line for each subset of sequential records which have the same type of modification;
the record position in said document of the first changed line;
a count of the sequential relative records in each said subset; and
the type of modification comprising each subset.

9. A system as in claim 8 wherein such control records further comprise information concerning a history of selected delta records.

10. A system as in claim 7 wherein said delta records are appended to said document.

SDB FILE ← 102

| | |
|---|---|
| ORIGINAL DOCUMENT | LEVEL 00000 |
| DELTA RECORD | LEVEL 00001 |
| DELTA RECORD | LEVEL 00023 |
| DELTA RECORD | LEVEL 00042 |

FIG. 1

# FIG. 2

**108** →

LVC FILE

**107**

CONTROL RECORD DATA

* Relative Record Position

* Old Reference Line

* Number Of Source Lines

* Line Status
  - MATCH
  - DELETE
  - INSERT
  - CHANGE

* (Other Historical DATA)

FIG. 3

REL. REC. POS.

OLD REF. LINE

RECORD COUNT

LINE STATUS

OTHER HISTORICAL DATA

102

SDB FILE

LV#N

LV#3

LV#2

LV#1

LVC FILE

RECREATED
SOURCE LEVEL 1

110

Start

200 — Open SDB file for input

202 — SDB open okay? — No →

Yes ↓

204 — Open LVC file for input

206 — LVC open okay? — No →

Yes ↓

208 — Open temporary work file for output

210 — TW open okay? — No →

Yes ↓

212 — Call RECREATE to recreate the source member → 6

A

FIG. 4

A

214 — R code = ∅ — No → 216 — Issue error message

Yes ↓

218 — Send source member in TW file to user

Close SDB, LVC, TW files — 220

End

FIG. 5

```
                    ┌─────────┐
                    │  Start  │
                    └────┬────┘
   ┌───┐                 │
   │ 4 ├──────────────┐  │
   └───┘              │  │
                      ▼  ▼
              ┌──────────────┐  ╭─230
              │   Read a     │
              │control record│
              │  from LVC    │
              │    file      │
              └──────┬───────┘
                     │      ╭─232
                     ▼
                  ╱──────╲          ┌────────┐
                 ╱  End    ╲   Yes  │        │
                ╱    of     ╲──────▶│ Return │
                ╲   file?   ╱       └────────┘
                 ╲        ╱
                  ╲──────╱
                     │ No
                     ▼        ╭─234
                  ╱──────╲
                 ╱  LVC    ╲   Yes
         Yes ◀──╱  delete   ╲
                ╲  record?  ╱
                 ╲        ╱
                  ╲──────╱
                     │ No
                     ▼              ╭─236
              ┌──────────────┐
              │   Use LVC    │
              │relative record│
              │  position to  │
              │ point at next │
              │  SDB record   │
              └──────┬───────┘
                     │
                     ▼
              ┌──────────────┐
              │Read a source │ ╭─238
              │ record from  │
              │  SDB file    │
              └──────┬───────┘
                     │
                     ▼
              ┌──────────────┐
              │ Write record │
              │  just read   │ ╭─240
              │ to temporary │
              │  work file   │
              └──────┬───────┘
                     │        ╭─242
                     ▼
                  ╱──────╲
            Yes  ╱ Exceed  ╲   No
         ◀──────╱record count╲
                ╲  in LVC   ╱
                 ╲    ?    ╱
                  ╲──────╱
```

FIG. 6

FIG. 7

```
                          ┌──────────┐
                          │   Start  │
                          └──────────┘
      ┌────┐                    │
     ╱  7  │────────────────────┤
     ╲────┘                     ▼
                          ┌──────────┐
                          │ Open LVC │──── 270
                          │ file for │
                          │  output  │
                          └──────────┘
                                │
  274                           ▼
   ┌──────────┐            ◇────────◇    272
   │ Display  │    No     ╱   LVC    ╲
   │  error   │◄─────────│    open?   │
   │ message  │           ╲          ╱
   └──────────┘            ◇────────◇
        │                      │ Yes
        │                      ▼
        │                 ┌──────────┐
        │                 │ Determine│
        │                 │ number of│──── 276
        │                 │records in│
        │                 │ returned │
        │                 │source member│
        │                 └──────────┘
        │                      │
        │                      ▼
        │                 ┌──────────┐
        │                 │Initialize│──── 278
        │                 │ fields in│
        │                 │LVC record│
        │                 └──────────┘
        │                      │
        │                      ▼
        │                 ┌──────────┐
        │                 │Write single│
        │                 │control record│─ 280
        │                 │ to LVC file│
        │                 └──────────┘
        │                      │
        │                      ▼
        │                 ┌──────────┐
        │                 │  Close   │──── 282
        │                 │ LVC file │
        │                 └──────────┘
        │                      │
        └──────────────────────┤
                               ▼
                          ┌──────────┐
                          │  Return  │
                          └──────────┘
```

FIG. 8

**Start**

290 — Open temporary work file containing returned source member for input

292 — Open a SDB file for output

296 — Display error message

294 — Files open? — No → Display error message

Yes

298 — Read a record from temporary work file

300 — Write same record to SDB file

302 — Last record? — No → (back to Yes)

Yes

304 — Close temporary work and SDB files

**Return**

## FIG. 9

**Start**

310 — Get base source element from library

312 — Call COMPARE Compare base and returned source members

314 — Have changes? — No →

Yes

316 — Get a copy of the SDB file for update

318 — Call BLDLVSDB Build new LVC and updated SDB file

11

**Return**

## FIG. 10

FIG. 11

```
                              ┌──────────┐
                              │  Start   │
                              └────┬─────┘
  ┌──┐                             │
  │11│────────────────────────────┤
  └──┘                             │
                          ╱────────┴────────╲
                    No   ╱       Have         ╲
         ┌─────────────┤     a previous    /370 │
         │              ╲   delete to       ╱
         │               ╲   process?      ╱
         │                ╲──────┬───────╱
         │                       │ Yes
         │                ┌──────┴────────┐   372
         │                │  Call DELETE  │
         │                │ Process delete│   ┌──┐
         │                │ delta record  │──▶│13│
         │                │ in hold buffer│   └──┘
         │                └──────┬────────┘
         │                       │
         └───────────────────────┤
                                 │
                        ╱────────┴────────╲           ╱──────────╲
                       ╱     End of    /374 ╲   No    ╱    Is   /376╲  Yes
                      │   super compare     ├────────┤  change type  ├──────┐
                       ╲  delta file?      ╱         ╲  a delete?   ╱       │
                        ╲──────┬─────────╱            ╲─────┬─────╱         │
                               │ Yes                       │ No            │
            382          ╱─────┴─────╲              ┌───────┴──────┐  ┌─────┴──────┐
                 No     ╱    Is    /   ╲            │  Compute #   │  │ Compute #  │
         ┌─────────────┤ change type    │ 380       │   Matched    │  │  Matched   │
         │              ╲  a delete?    ╱           │   records    │  │  records   │
         │               ╲─────┬──────╱            │ after insert │  │after delete│
         │                     │ Yes     386       └───────┬──────┘  └─────┬──────┘
  ┌──────┴──────┐       ┌──────┴───────┐                   │               │
  │  Compute #  │ 384   │  Compute #   │                   │               │
  │  remaining  │       │  remaining   │                   │               │
  │  records in │       │  records in  │                   │               │
  │returned memb│       │returned membs│                   │               │
  │after insert │       │after delete  │                   │               │
  └──────┬──────┘       └──────┬───────┘                   │               │
         │                     │                           │               │
         └─────────────────────┼───────────────────────────┴───────────────┘
                               │
                        ┌──────┴───────┐
                        │ Set change   │  388
                        │ status in    │
                        │ LVC record   │
                        │ to "M" for   │
                        │  matched     │
                        └──────┬───────┘
                               │
                        ┌──────┴───────┐  390
                        │ Call BLDLVC  │
                        │  Add match   │   ┌──┐
                        │control record│──▶│15│
                        │ to LVC file  │   └──┘
                        └──────┬───────┘
                               │
                        ┌──────┴───────┐
                        │   Return     │
                        └──────────────┘
```

FIG. 12

0 230 616

```
                              ┌─────────┐
                              │  Start  │
                              └────┬────┘
    ⬠11 ──────────────────────────┤◄─────────────────── ⬠12
                                   │◄──────────┐
                                   │           │
                                   ▼        ⬠14
```

**Start**

┌─────────────┐
│ Point at    │─── 402
│ previous    │
│ delete record│
│ in hold buffer│
└─────────────┘

400 ◄ Processing current delete?  —No→  402

┌─────────────┐
│ Call BLDLVC  │─── 404      ⬠15
│ Add Delete   │
│ control record│
│ to LVC file  │
└─────────────┘

┌─────────────┐
│ Swap pointer │─── 406
│ back to      │
│ current delete│
│ record       │
└─────────────┘

408 ◄ Is previous change type a delete? ►—No→

410 ◄ Is current change type a delete? ►—No→

412 ◄ Is this a single delete? ►—No→

414 ◄ Are deletes contiguous? ►—No→

┌─────────────┐
│ Set hold     │─── 418
│ buffer to    │
│ blanks       │
└─────────────┘

┌─────────────┐
│ Move delete  │─── 416
│ delta record │
│ into hold    │
│ buffer       │
└─────────────┘

420 ◄ Is it a single delete? ►—No→

┌─────────────┐
│ Set change   │─── 422
│ status in    │
│ LVC record   │
│ to "D" delete│
└─────────────┘

┌─────────────┐
│ Move delete  │─── 426
│ delta record │
│ into hold    │
│ buffer       │
└─────────────┘

┌─────────────┐
│ Call BLDLVC  │─── 424
│ Add delete   │
│ control records│
│ to LVC file  │
└─────────────┘

⬠15

┌─────────┐
│ Return  │
└─────────┘

FIG. 13

BM — DA 985 002

```
                          ┌─────────┐
                          │  Start  │
                          └────┬────┘
        ┌──┐                   │
        │11│───────────────────┤
        └──┘                   │
                          ╱────┴────╲
                         ╱    Is     ╲
                        ╱    it a     ╲    No
                  430──╱ single line   ╲──────────────────────┐
                       ╲   insert?    ╱                        │
                        ╲            ╱                         │
                         ╲────┬─────╱                          │
                              │ Yes                            │
                         ╱────┴────╲                           │
                        ╱  Have     ╲       No                 │
                  432──╱  previous   ╲─────────────────────┐   │
                       ╲  delete?   ╱                      │   │
                        ╲          ╱                       │   │
                         ╲───┬────╱                        │   │
                             │ Yes                         │   │
                        ╱────┴────╲                        │   │
                       ╱  Delete   ╲                       │   │
                      ╱ and insert  ╲      No              │   │
                434──╱  NREF lines    ╲──────────────────┐ │   │
                     ╲    match?     ╱                   │ │   │
                      ╲             ╱                    │ │   │
                       ╲────┬──────╱                     │ │   │
                            │ Yes                        │ │   │
                       ╱────┴────╲              ╱────────┴─┴───┴╲
                      ╱  Delete   ╲            ╱     Have        ╲
                     ╱ and insert  ╲   No     ╱   previous        ╲   No
               436──╱  OREF lines    ╲───────╱  delete in hold     ╲──────┐
                    ╲    match?     ╱   446──╲     buffer?         ╱       │
                     ╲             ╱          ╲                   ╱        │
                      ╲───┬───────╱            ╲────────┬────────╱         │
                          │ Yes                        │ Yes              │
              ┌───────────┴──────────┐     ┌───────────┴──────────┐       │
              │   Call ADDTOSDB      │     │   Call DELETE        │       │
          438 │   Add changed        │ ┌──┐│ process previous     │ ┌──┐  │
              │   line to bottom     │─│16││ single delete        │─│13│  │
              │   of SDB file        │ └──┘│ record first         │ └──┘  │
              └───────────┬──────────┘     └───────────┬──────────┘       │
                          │                            │◄─────────────────┘
              ┌───────────┴──────────┐     ┌───────────┴──────────┐
              │   Set change         │     │   Call ADDTOSDB      │
          440 │   status to          │ 450 │   Add inserted       │ ┌──┐
              │   "C" for change     │     │   line(s) to         │─│16│
              │   in LVC I/O         │     │   bottom of SDB      │ └──┘
              │   buffer             │     │   file               │
              └───────────┬──────────┘     └───────────┬──────────┘
              ┌───────────┴──────────┐     ┌───────────┴──────────┐
              │   Call BLDLVC        │     │   Set change         │
          442 │   Add change         │ ┌──┐│   status to          │
              │   control record     │─│15││   "I" for insert     │ 452
              │   to LVC file        │ └──┘│   in LVC I/O         │
              └───────────┬──────────┘     │   buffer             │
              ┌───────────┴──────────┐     └───────────┬──────────┘
              │   Set hold           │     ┌───────────┴──────────┐
          444 │   buffer to          │     │   Call BLDLVC        │ 454
              │   blanks             │     │   Add insert         │ ┌──┐
              └───────────┬──────────┘     │   control record     │─│15│
                          │◄───────────────│   to LVC file        │ └──┘
                     ┌────┴────┐           └──────────────────────┘
                     │ Return  │
                     └─────────┘
```

FIG. 14

FIG. 15

## FIG. 16

```
                    Start

    14 ──────────→

                ┌──────────────┐
                │  Position to │
                │ read returned│ 490
                │source members│
                │    record    │
                └──────────────┘
                       ↓
                ┌──────────────┐
                │ Set read loop│ 492
                │limit to numbers│
                │  of records  │
                │for this change│
                │     type     │
                └──────────────┘
                       ↓
                ┌──────────────┐
            ┌──→│Read a source │ 494
            │   │    record    │
            │   └──────────────┘
            │          ↓
            │        ╱────╲  496      Yes
            │       ╱ End of ╲──────────┐
            │       ╲ file?  ╱          │
            │        ╲────╱             │
            │          ↓ No    498      │
            │   ┌──────────────┐        │
            │   │ Write record │        │
            │   │just read to  │        │
            │   │   SDB file   │        │
            │   └──────────────┘        │
            │          ↓ ←──────────────┘
            │        ╱────╲  500
        No  │       ╱ Reach ╲
            └──────╱  limit  ╲
                   ╲  yet?   ╱
                    ╲────╱
                       ↓ Yes
                    Return
```

## FIG. 18

```
                    Start

    7 ──────────→

                ┌──────────────┐
                │ Reconstruct  │ 550
                │source member │
                │ using new LVC│
                │and updated   │
                │  SDB files   │
                └──────────────┘
                       ↓
            No        ╱────╲  551
       ┌──────────── ╱ Rebuild ╲
       │             ╲  okay?  ╱
       │              ╲────╱
       │                 ↓ Yes
       │          ┌──────────────┐
       │          │ Compare the  │ 552
       │          │returned source│
       │          │ member with  │
       │          │the recreated │
       │          │   member     │
       │          └──────────────┘
       │                 ↓
       │               ╱────╲  554
       │              ╱ Members ╲  No
       │              ╲ equal?  ╱──────┐
       │               ╲────╱          │
       │    558          ↓ Yes    556  │
    ┌──────────┐                  ┌──────────┐
    │ Display  │                  │ Display  │
    │  error   │                  │  error   │
    │ message  │                  │ message  │
    └──────────┘                  └──────────┘
       │              ↓              │
       └──────────────┼──────────────┘
                      ↓
                   Return
```

# FIG. 17

**Start**

502 — Open new LVC file for input

504 — Open compress LVC file for output

506 — Files ready for I/O? — No → 

Yes

508 — Read from newly created LVC file

510 — End of file?

512 — Close new LVC file Close compressed LVC file (Yes)

514 — Everything okay? — No →

516 — Erase new LVC file Rename compressed LVC file (Yes)

**Return**

518 — First time? — No → 524 — Set match flag off

520 — Prime compare buffer by moving LVC record just read to compare buffer (Yes)

522 — Set first time switch off

526 — Previous LVC match current LVC? — No →

528 — Bump record counter Set match flag on (Yes)

**E**

530 — Match flag off? — No → 532 — End of LVC file? — Yes →

530 Yes →

534 — Move record count to LVC record in compare buffer

536 — Write LVC record in compare buffer to compress LVC file

538 — Set new comparand by moving current LVC record to compare buffer

540 — Set record count to 1 for next set

**E**

M — DA 985 002